# EUROPÄISCHE PATENTSCHRIFT

(11) **EP 4 151 866 B1**
(45) Veröffentlichungstag und Bekanntmachung des Hinweises auf die Patenterteilung: **19.11.2025**
(21) Anmeldenummer: 22195804.4
(22) Anmeldetag: 15.09.2022
(51) Int. Cl.: F16B 21/04, F16B 12/10

(54) **BEFESTIGUNGSVORRICHTUNG**
FASTENING DEVICE
DISPOSITIF DE FIXATION

(30) Priorität: 15.09.2021 DE 102021123919
(43) Veröffentlichungstag der Anmeldung: 22.03.2023
(73) Patentinhaber: BPSO GmbH & Co. KG, 84544 Aschau am Inn (DE)
(72) Erfinder: SCHNEIDER, Klemens, 84544 Aschau am Inn (DE); SALFER, Maximilian, 84453 Mühldorf am Inn (DE)
(74) Vertreter: HGF

(56) Entgegenhaltungen:
- WO-A1-2018/142098

## Beschreibung

Die Erfindung betrifft eine Befestigungsvorrichtung und ein Verfahren zum lösbaren Verbinden von zwei Bauteilen mit einer solchen Befestigungsvorrichtung.

Im Gebäudebau oder auch im Möbelbau werden Befestigungseinrichtungen vornehmlich dafür eingesetzt, um zwei oder mehrere aneinander stoßende Bauteile miteinander zu verbinden. Im Möbelbau werden beispielsweise Möbelverbinder bzw. Möbelbeschläge verwendet, um die Bauteile eines zerlegbaren Möbelkorpus miteinander zu verbinden. Hierbei handelt es sich bei den Bauteilen meist um Holzbauteile wie Bodenplatten, Deckplatten, Seitenwände oder andere Rahmen- und Stützteile für Schränke, Betten oder Tische.

Im Gebäudebau hingegen, wie beispielsweise beim Bau von Holzhäusern, ist es oft notwendig Bauteile aus Holz mit Bauteilen aus Beton zu verbinden. Dies können beispielsweise Wandelemente aus Holz sein, die mit einem Betonfundament verbunden werden sollen.

Die WO 03027510 A2 betrifft eine Vorrichtung und ein Verfahren zum lösbaren Verbinden von zwei aneinander stoßenden Bauteilen. Die Vorrichtung umfasst ein stangenförmiges Verbindungselement und ein zylinderförmiges drehbares Verriegelungselement. Das Verbindungselement wird fest mit einem ersten Bauteil verbunden und das Verriegelungselement in einem zweiten Bauteil versenkt. Das zweite Bauteil weist einen Durchgang auf, durch den das befestigte Verbindungselement mit dem versenkten Verriegelungselement in Kontakt gebracht werden kann. Hierfür weist das Verbindungselement ein Eingriffselement auf, das in eine entsprechende seitliche Ausnehmung des Verriegelungselements passt, wobei durch ein Drehen des Verriegelungselements eine formschlüssige Verbindung zwischen dem Verbindungselement und dem Verriegelungselement erreicht wird.

Aus der DE 20 2014 103 040 U1 geht ein Langloch-Verbindersystem hervor, das ein erstes Verbinderteil, ein Sicherungselement und ein zweites Verbinderteil umfasst. Das erste Verbinderteil weist eine Ausnehmung für das zylinderförmige Sicherungselement und entlang einer Längsachse eine Durchgangsöffnung für einen Stift des zweiten Verbinderteils auf. Der Stift des zweiten Verbinderteils passt in eine seitliche Ausnehmung des Sicherungselements, sodass durch ein Drehen des Sicherungselements das erste Verbinderteil, das Sicherungselement und das zweite Verbinderteil formschlüssig miteinander verbunden werden können. Zudem weisen das erste Verbinderteil und das zweite Verbinderteil entlang ihrer Längsachsen zwei Gewinde auf, womit sie mittels Schrauben jeweils mit einem Bauteil verbunden werden können.

Die DE 20 2005 009 719 U1 zeigt eine Befestigungsanordnung für Möbelteile, insbesondere Tischmöbelteile. Das Möbelteil weist eine Platte auf, die mit einem Tragteil verbindbar ist. Für die Verbindung ist ein Einsatzteil, das an der Platte anordbar ist, und ein Anschlussteil, das am Tragteil anordbar ist, vorgesehen. Das Einsatzteil und das Anschlussteil sind mittels eines Bajonettverschlusses lösbar miteinander verbindbar.

In der US 9,945,408 B2 wird eine Kupplungsvorrichtung beschrieben, die eine männliche und eine weibliche Komponente umfasst. Die weibliche Komponente weist mehrere Vorsprünge auf, die in Nuten der männlichen Komponente eingreifen. Durch ein Drehen der männlichen Komponente innerhalb der weiblichen Komponente wird ein Bajonettverschluss zwischen den beiden Komponenten erzeugt.

Die DE 10 2015 219 778 B4 weist eine Möbelverbindungsanordnung mit einem länglichen Einsatzteil, einem stabförmigen Verbindungselement und einem stiftförmigen Fixierelement auf. Das Einsatzteil weist ein Gewinde auf und wird in ein erstes Bauteil eingebracht. Zudem weist das erste Bauteil entlang einer Querachse des Einsatzteils eine Durchgangsöffnung auf, in die das Fixierelement eingebracht werden kann. Das Verbindungselement wird an einem zweiten Bauteil befestigt. Das Einsatzteil weist entlang einer Längsachse eine Öffnung für das Verbindungselement und entlang einer Querachse eine Ausnehmung für das Fixierelement auf. Das Fixierelement kann somit kraftschlüssig mit dem in das Einsatzteil eingebrachte Verbindungselement verbunden werden.

In der DE 20 2017 002 531 U1 wird ein Korpusverbinder gezeigt, wobei ein stangenförmiger Dübel mit einem Gewinde an einem ersten Bauteil befestigt wird. Ein zylinderförmiges Gehäuse wird in einem zweiten Bauteil versenkt, wobei das zweite Bauteil eine Durchgangsöffnung aufweist, durch die der Dübel bis zum Gehäuse geführt wird. Das Gehäuse weist eine seitliche Ausnehmung, in die der Dübel eingebracht wird, und eine zweite Ausnehmung auf, in die ein Gewindestift derart eingebracht wird, dass er eine kraftschlüssige Verbindung mit dem Dübel eingehen kann.

Die DE 298 22 032 U1 betrifft eine Befestigungs- und Kaschierhülse, um ein Rohr oder einen Profilstab auf einer Fläche zu befestigen. Ein Spalt, der an der Stoßstelle zwischen der Stirnfläche des Rohres oder des Profilstabes und der Fläche entsteht, soll gleichzeitig mit der Befestigungs- und Kaschierhülse möglichst geschützt und ästhetisch überbrückt bzw. kaschiert werden. Hierzu sind eine Befestigungs- und Kaschierhülse und einen Adapter vorgesehen, wobei die Befestigungs- und Kaschierhülse auf den Adapter aufgeschoben wird. Die Befestigungs- und Kaschierhülse ist ein glatt hohlzylindrischer Körper. Der Adapter ist beispielsweise mit dem Boden lösbar verbunden. Es kann ein Bajonettverschluss vorgesehen sein, um die Befestigungs- und Kaschierhülse am Adapter zu fixieren. Der Bajonettverschluss dient dazu, in einem letzten Schritt, nachdem die Befestigungs- und Kaschierhülse auf den Adapter geschoben wurde, die Befestigungs- und Kaschierhülse am Adapter zu fixieren. Da der Adapter zu diesem Zeitpunkt bereits festgeschraubt ist, kann dies nur durch ein Drehen der Befestigungs- und Kaschierhülse funktionieren. Der Adapter ist nicht drehbar gelagert.

Die WO 2018/142098 A1 betrifft eine Sicherungsvorrichtung zur Anbringung von Leichtbaugegenständen beispielsweise Akustikpanelen. Sie besteht aus einer Einfügeanordnung, die zum Versenken in einer Leichtbauplatte ausgestaltet ist, und einer Befestigungsanordnung, die zum Anbringen der Einfügeanordung an einem Verbindungsgeber ausgebildet ist. Der Verbindungsgeber ist derart ausgebildet, dass die Sicherungsvorrichtung mit einem länglichen Aufhängelement verbunden werden kann. Zusätzlich wird ein Durchgang in der Einfügeanordnung und der Befestigungsanordnung definiert, um das Einführen des Aufhängeelements durch die Sicherungsanordnung zu ermöglichen.

Die Aufgabe der vorliegenden Erfindung ist es, eine Befestigungsvorrichtung bereitzustellen, mit der zwei Bauteile lösbar verbunden werden, wobei die Verbindung einfach, stabil und zuverlässig ist.

Insbesondere ist es die Aufgabe der vorliegenden Erfindung, eine Befestigungsvorrichtung bereitzustellen, mit der ein Fertigbauteil und/oder ein Holzbauteil einfach und zuverlässig mit einem Fertigbauteil und/oder einem Betonbauteil verbunden werden kann.

Eine oder mehrere dieser Aufgaben werden mit der Befestigungsvorrichtung gemäß des unabhängigen Patentanspruchs gelöst. Vorteilhafte Ausgestaltungen sind in den davon abhängigen Unteransprüchen angegeben.

Gemäß der vorliegenden Erfindung ist eine Befestigungsvorrichtung vorgesehen. Die Befestigungsvorrichtung umfasst ein Befestigungselement und ein Gegenbefestigungselement. Das Befestigungselement ist derart ausgebildet, dass es in einem ersten Bauteil versenkbar und befestigbar ist. Das Gegenbefestigungselement weist ein Gewinde auf, um mit einem in einem zweiten Bauteil eingegossenen oder anderweitig daran befestigten Halteelement schraubbar verbunden werden zu können. Das Befestigungselement und das Gegenbefestigungselement bilden einen Bajonettverschluss aus und das Gegenbefestigungselement ist am Halteelement mittels der Schraubverbindung um eine Drehachse drehbar gelagert, wobei durch ein Drehen des Gegenbefestigungselements um die Drehachse das Gegenbefestigungselement vom Halteelement gelöst bzw. an das Halteelement gezogen werden kann, wodurch beim Lösen des Gegenbefestigungselements vom Haltelement der Bajonettverschluss geöffnet und beim Anziehen des Gegenbefestigungselements an das Haltelement der Bajonettverschluss geschlossen wird.

Das erste Bauteil ist vorzugsweise ein Holzbauteil und das zweite Bauteil ein Betonbauteil.

Eines oder beide der Bauteile können Fertigbauteile, insbesondere aus Holz, Beton und/oder Stahl sein.

Die Idee der Erfindung ist es, in einem ersten Schritt das Befestigungselement im ersten Bauteil zu versenken und zu befestigen. Zudem wird das Gegenbefestigungselement mit dem im zweiten Bauteil eingegossenen oder damit verbundenen Halteelement verschraubt. In einem zweiten Schritt werden das erste Bauteil mit dem Befestigungselement und das zweite Bauteil mit dem Gegenbefestigungselement derart einander zugeführt, dass der Bajonettverschluss, den das Befestigungselement und das Gegenbefestigungselement ausbilden, geschlossen werden kann. Das Lösen und Verschrauben des Gegenbefestigungselements und das Öffnen und Schließen des Bajonettverschlusses geschieht dabei durch Drehen des Gegenbefestigungselementes um die gleiche Drehachse. Mittels des Bajonettverschlusses wird eine formschlüssige Verbindung zwischen dem Befestigungselement und dem Gegenbefestigungselement erzielt, was ein mögliches Herausziehen oder Herausfallen des Befestigungselements weg vom Gegenbefestigungselement verhindert.

Erfindungsgemäß ist hierbei die Drehrichtung mit der das Gegenbefestigungselement mit dem Halteelement verschraubt wird dieselbe, wie die Drehrichtung mit der der Bajonettverschluss geschlossen wird. So kann eine Drehung des Gegenbefestigungselementes um die Drehachse dazu genutzt werden, das Gegenbefestigungselement am Halteelement final zu verschrauben und gleichzeitig den Bajonettverschluss zu schließen, um eine formschlüssige Verbindung zwischen dem Befestigungselement und dem Gegenbefestigungselement zu erzeugen. Somit können zwei Bauteile auf eine einfache Art und Weise miteinander befestigt werden und die Befestigung ist zudem sicher. Es wird lediglich etwas Platz zwischen den beiden Bauteilen benötigt, um das Gegenbefestigungselement noch drehen zu können.

Auch eine Demontage der Bauteile, insbesondere des Holzbauteils vom Betonbauteil, ist so einfach möglich. Ein Drehen des Gegenbefestigungselements in entgegengesetzter Richtung bewirkt gleichzeitig das Öffnen des Bajonettverschlusses und das Lösen des Gegenbefestigungselements vom Halteelement.

Der eingangs erläuterte Adapter gemäß der DE 298 22 032 U1 kann mittels eines Schraubbolzens drehfest mit einer Wand oder einem Boden verbunden werden, so dass dieser nicht gedreht werden kann, um eine Kopplung mit der Kaschierhülse zu bilden. Die Schraubverbindung dient bei dieser bekannten Vorrichtung somit lediglich zum Befestigen aber nicht als Lager zum Drehen des Adapters. Das Gegenbefestigungselement der vorliegenden Erfindung ist hingegen drehbar am Halteelement gelagert und mit diesem mittels einer Schraubverbindung verbunden. Die Schraubverbindung erfüllt gleichzeitig zwei Funktionen, die der drehbaren Lagerung des Gegenbefestigungselements am Halteelementes und die zur Befestigung des Gegenbefestigungselements am Befestigungselement bzw. am ersten Bauteil. Mit einer Drehbewegung des Gegenbefestigungselements kann der Bajonettverschluss geschlossen werden, der das Gegenbefestigungselement am Befestigungselement lösbar fixiert. Gleichzeitig kann das Gegenbefestigungselement so mittels der Schraubverbindung lösbar am Halteelement fixiert werden. Umgekehrt gilt dies entsprechend, wenn man das Gegenbefestigungselement vom Befestigungselement bzw. Halteelement lösen möchte. Eine solche Doppelfunktion der Schraubverbindung geht aus der DE 298 22 032 U1 nicht hervor.

Es ist auch möglich, dass die Drehrichtung mit der das Gegenbefestigungselement mit dem Halteelement verschraubt wird und die Drehrichtung mit der der Bajonettverschluss geschlossen wird entgegengesetzt zueinander sind. Dann muss das Gegenbefestigungselement leicht vom Halteelement gelöst werden, wenn der Bajonettverschluss geschlossen wird.

Das Halteelement kann eine Gewindestange mit einem Außengewinde sein und das Gegenbefestigungselement kann eine Sacklochbohrung mit einem Innengewinde aufweisen, um mit dem Außengewinde der Gewindestange in Eingriff zu stehen.

Das Halteelement kann eine Hülse mit einem Innengewinde sein und das Gegenbefestigungselement kann einen Vorsprung mit einem Außengewinde aufweisen, um mit dem Innengewinde der Hülse in Eingriff zu stehen.

Mittels des Gegenbefestigungselements ist eine Höhenverstellung am Halteelement möglich. Je nachdem wie weit das Gegenbefestigungselement entlang des Halteelements verschraubt wird, definiert es den Abstand zwischen dem ersten Bauteil und dem zweiten Bauteil. Dies kann beispielsweise dann genutzt werden, wenn es sich bei den ersten Bauteilen, insbesondere Holzbauteilen, um Deckenelemente handelt, die aus praktischen oder optischen Gründen höhenversetzt zueinander angebracht werden sollen.

Bevorzugt ist das Halteelement als Gewindestange ausgebildet und das Gegenbefestigungselement weist eine Sacklochbohrung mit einem Innengewinde auf. Hierdurch wird weniger Platz zwischen dem ersten Bauteil und dem zweiten Bauteil benötigt, um das Gegenbefestigungselement noch drehen zu können, da das Gegenbefestigungselement an der Gewindestange aufgeschraubt wird und an der Gewindestange zugänglich bleibt.

Am Befestigungselement kann ein Zentrierelement vorgesehen sein und das Gegenbefestigungselement kann an einer von dem Halteelement wegweisenden Seite ein Gegenzentrierelement aufweisen, wobei das Zentrierelement zur passgenauen Ineingriffnahme des Gegenzentrierelements ausgebildet ist.

Mit dem Zentrierelement und dem Gegenzentrierelement ist eine erleichterte Montage möglich, da das Befestigungselement und das Gegenbefestigungselement alleine durch das Zusammenführen zentriert werden. Zudem wird durch das Zentrierelement und das Gegenzentrierelement sichergestellt, dass das Befestigungselement und das Gegenbefestigungselement passgenau ineinandergreifen und somit eine stabile Verbindung ohne Spiel ausbilden.

Das Zentrierelement kann als ein konisch verjüngend verlaufendes Sackloch ausgebildet sein und das Gegenzentrierelement kann eine sich konisch verjüngende Spitze sein bzw. das Zentrierelement kann eine sich konisch verjüngende Spitze sein und das Gegenzentrierelement kann als ein konisch verjüngend verlaufendes Sackloch ausgebildet sein.

Vorzugsweise ist das Zentrierelement als ein konisch verjüngend verlaufendes Sackloch ausgebildet und das Gegenzentrierelement ist eine sich konisch verjüngende Spitze.

Am Befestigungselement kann ein Verschlusselement vorgesehen sein und das Gegenbefestigungselement kann ein Gegenverschlusselement aufweisen, wobei das Gegenverschlusselement derart passgenau mit dem Verschlusselement in Eingriff treten kann, dass das Verschlusselement und das Gegenverschlusselement den Bajonettverschluss ausbilden.

Ein Bajonettverschluss ist ein Verschluss zum Ausbilden einer formschlüssigen Verbindung indem mittels einer Drehung, die vorzugsweise kleiner als 360° ist, ein oder mehrere Vorsprünge in entsprechende Ausnehmungen eingreifen.

Das Verschlusselement und das Gegenverschlusselement bilden den Bajonettverschluss aus und sorgen damit für eine zuverlässige Verbindung von Befestigungselement und Gegenbefestigungselement.

Das Verschlusselement kann zumindest eine Ausnehmung im Befestigungselement sein und das Gegenverschlusselement kann zumindest einen am Gegenbefestigungselement angeformten Vorsprung aufweisen bzw. das Verschlusselement kann zumindest einen am Befestigungselement angeformten Vorsprung aufweisen und das Gegenverschlusselement kann zumindest eine Ausnehmung im Gegenbefestigungselement sein.

Bevorzugt wird das Verschlusselement von zwei Ausnehmungen im Befestigungselement ausgebildet. Die Ausnehmungen erstrecken sich vom sacklochförmigen Zentrierelement seitlich nach außen und sind bezüglich zu diesem einander diametral gegenüberliegend angeordnet. Diese beiden Verschlussausnehmungen verlaufen zum einen entlang einer Längsachse des Befestigungselementes und sind an einem von einer Stirnfläche, an welcher das sacklochförmige Zentrierelement und die beiden Verschlussausnehmungen münden, entfernten Bereich abgewinkelt geformt, sodass die Verschlussausnehmungen einen in der Seitenansicht etwa L-förmigen Pfad zur Aufnahme von entsprechenden Gegenverschlusselementen bilden.

Die Gegenverschlusselemente werden vorzugsweise von zwei sich gegenüberliegenden und an das Gegenbefestigungselement angeformten Stiften ausgebildet. Die Verschlussausnehmungen des Befestigungselements sind derart ausgebildet, dass sie beim Zusammenführen die Stifte des Gegenbefestigungselements mit wenig Spiel aufnehmen und bei einem Drehen des Gegenbefestigungselements die Stifte so führen, dass der Bajonettverschluss geöffnet bzw. geschlossen wird.

Am Umfang kann das Gegenbefestigungselement eine Werkzeugkontur zum formschlüssigen Angreifen eines Werkzeugs aufweisen.

Die Werkzeugkontur ist bevorzugt aus sechs geradlinig verlaufende Außenkanten ausgebildet, die ein Sechseck bilden. So kann die Werkzeugkontur mit einem Schraubenschlüssel angegriffen werden, um das Gegenbefestigungselement zu drehen.

Das Befestigungselement kann zumindest eine sich parallel zur Drehachse erstreckende Bohrung aufweisen, um das Befestigungselement im ersten Bauteil mittels einer Schraube zu befestigen.

Die zumindest eine Bohrung im Befestigungselement erstreckt sich derart in das Befestigungselement, dass sie zugänglich ist, auch wenn das Befestigungselement vollständig im ersten Bauteil versenkt ist. Die einfachste Variante dies sicherzustellen ist, die Bohrung parallel zur Drehachse im Befestigungselement anzuordnen. So kann das Befestigungselement einfach und leicht zugänglich mit dem ersten Bauteil verschraubt werden und das Zentrierelement des Befestigungselements ist ebenfalls leicht zugänglich.

Das Gewinde des Gegenbefestigungselements kann derart ausgerichtet sein, dass durch ein Drehen des Gegenbefestigungselements gleichzeitig das Gegenbefestigungselement an das zweite Bauteil gezogen und der Bajonettverschluss geschlossen wird.

Mit dieser Ausgestaltung ist es möglich eine Drehung des Gegenbefestigungselements um die Drehachse dazu zu nutzen, das Gegenbefestigungselement am Halteelement final zu verschrauben und gleichzeitig den Bajonettverschluss zu schließen, um eine formschlüssige zwischen dem Befestigungselement und dem Gegenbefestigungselement zu erzeugen.

Weiterhin ist ein erfindungsgemäßes Verfahren zum Befestigen eines ersten Bauteils, insbesondere eines Holzbauteils, an einem zweiten Bauteil, insbesondere einem Betonbauteil, mittels einer Befestigungsvorrichtung vorgesehen, umfassend die Schritte,
Versenken eines Befestigungselements ersten Bauteil,
Befestigen des Befestigungselements im ersten Bauteil,
Schraubbares Verbinden eines Gegenbefestigungselements mit einem am zweiten Bauteil befestigten bzw. darin eingegossenen Halteelement,
Zusammenführen des ersten Bauteils mit dem Befestigungselement und des zweiten Bauteils mit dem Gegenbefestigungselement,
Ineingriffnahme eines Gegenverschlusselements des Gegenbefestigungselements mit einem Verschlusselement des Befestigungselements und
Drehen des Gegenbefestigungselements um die eine Drehachse zum Schließen eines Bajonettverschlusses.

Die vorstehend anhand der Befestigungsvorrichtung beschriebenen Vorteile gelten analog für das erfindungsgemäße Verfahren.

Weitere Aufgabe, Merkmal und Vorteil der vorliegenden Erfindung werden aus der Beschreibung und dem beispielhaften Ausführungsbeispiel ersichtlich, das in den beigefügten Zeichnungen dargestellt ist. Diese zeigen in:
- Figur 1: eine schematische Darstellung eines Befestigungselements einer erfindungsgemäßen Befestigungsvorrichtung,
- Figur 2: eine schematische Darstellung des Befestigungselements in einer Draufsicht,
- Figur 3: eine schematische Darstellung des Befestigungselements in einer seitlichen Schnittdarstellung,
- Figur 4: eine schematische Darstellung des Befestigungselements, versenkt in einem ersten Bauteil, insbesondere in einem Holzbauteil, in einer seitlichen Schnittdarstellung
- Figur 5: eine schematische Darstellung eines Gegenbefestigungselements einer erfindungsgemäßen Befestigungsvorrichtung in einer seitlichen Schnittdarstellung,
- Figur 6: eine schematische Darstellung des Gegenbefestigungselements in einer weiteren seitlichen Schnittdarstellung, in
- Figur 7: eine schematische Darstellung des Gegenbefestigungselements in einer Draufsicht, und in
- Figur 8: eine schematische Darstellung des Gegenbefestigungselements, mittels einer Gewindestange mit einem zweiten Bauteil, insbesondere einem Betonbauteil, verbunden, in einer seitlichen Schnittdarstellung.

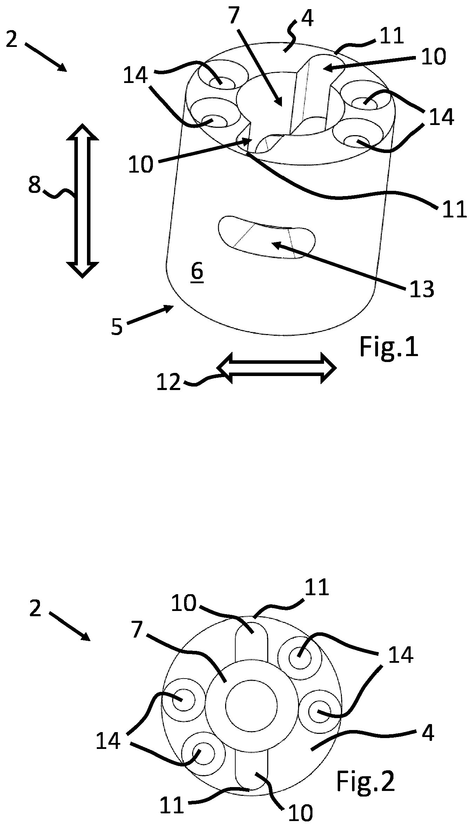

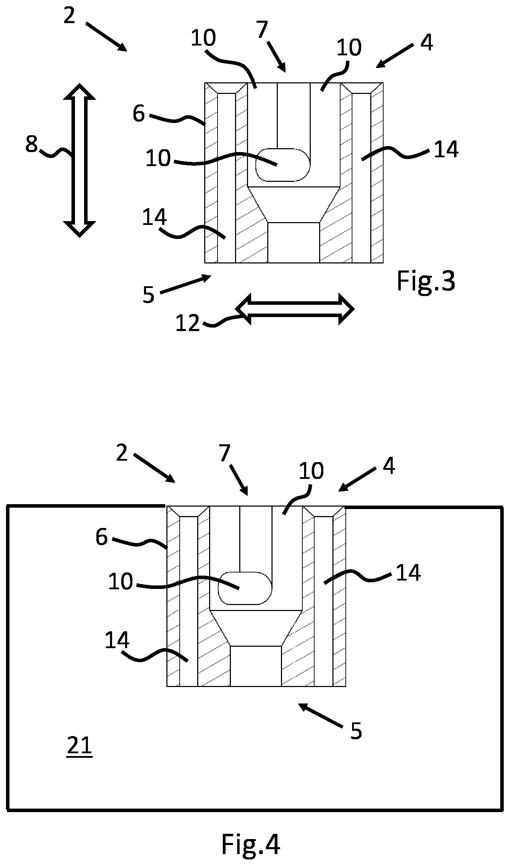

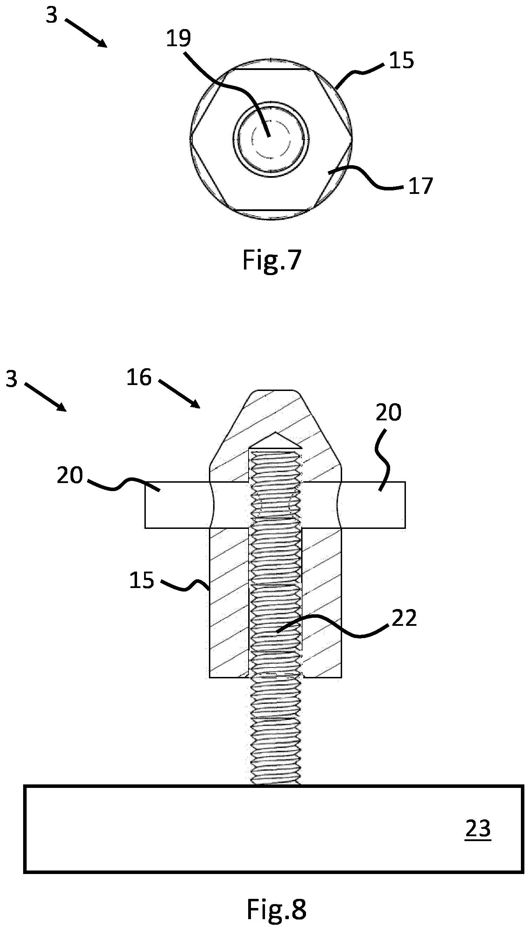

Im Folgenden wird eine erfindungsgemäße Befestigungsvorrichtung 1 beispielhaft anhand eines Ausführungsbeispiels näher beschrieben (Fig. 1-8).

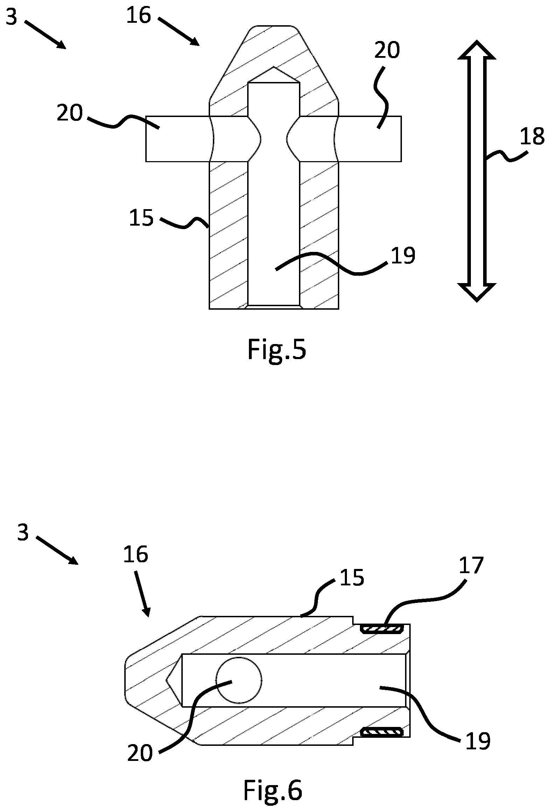

Die erfindungsgemäße Befestigungsvorrichtung 1 umfasst ein Befestigungselement 2 (Fig. 1-4) und ein Gegenbefestigungselement 3 (Fig. 5-8).

Das Befestigungselement 2 ist ein zylinderförmiger Körper und weist eine Stirnfläche 4 auf. Gegenüber der Stirnfläche 4 liegend ist eine Bodenfläche 5 angeordnet. Die Stirnfläche 4 und die Bodenfläche 5 sind über eine radial umlaufende Mantelfläche 6 miteinander verbunden. Eine Längsachse 8 erstreckt sich von der Bodenfläche 5 zur Stirnfläche 4.

Das Gegenbefestigungselement 3 ist ein im Wesentlichen zylinderförmiger Körper und weist eine radial umlaufende Wandung 15 auf. Das Gegenbefestigungselement 3 weist eine Längsachse 18 auf. Entlang der Längsachse 18 ist im Zentrum des Gegenbefestigungselements 3 eine Sacklochbohrung 19 angeordnet. Die Sacklochbohrung 19 weist ein Innengewinde auf.

Es sind ein Holzbauteil 21 und ein Betonbauteil 23 vorgesehen. Das Holzbauteil 21 weist eine Ausfräsung auf. Die Ausfräsung ist derart zur Aufnahme des Befestigungselements 2 ausgebildet, dass die Stirnfläche 4 des Befestigungselements 2 plan mit einer Oberfläche des Holzbauteils 21 verläuft. Das Betonbauteil 23 weist ein Haltelement 22 auf. Das Halteelement 22 ist eine in das Betonbauteil 23 eingegossene Gewindestange mit einem Außengewinde. Das Innengewinde der Sacklochbohrung 19 des Gegenbefestigungselements 3 ist ausgebildet, um mit dem Außengewinde der Gewindestange in Eingriff zu stehen.

Im Zentrum der Stirnfläche 4 weist das Befestigungselement 2 ein Zentrierelement 7 auf. Das Zentrierelement 7 ist ein kreisrundes konisch verjüngend verlaufendes Sackloch, das sich entlang der Längsachse 8 in Richtung Bodenfläche 5 erstreckt.

An einem der Öffnung der Sacklochbohrung 19 gegenüber liegenden Ende weist das Gegenbefestigungselement 3 außen ein Gegenzentrierelement 16 auf. Das Gegenzentrierelement 16 ist als konisch verjüngend verlaufende abgeflachte Spitze ausgebildet.

Das Zentrierelement 7 des Befestigungselements 2 ist zum einen zur Aufnahme des Gegenbefestigungselements 3 und gleichzeitig zur passgenauen Aufnahme des Gegenzentrierelements 16 des Gegenbefestigungselements 3 ausgebildet.

Im Bereich des Zentrierelements 7 weist das Befestigungselement 2 ein Verschlusselement 10 auf. Das Verschlusselement 10 wird von zwei Ausnehmungen im Befestigungselement ausgebildet. Die Ausnehmungen erstrecken sich vom sacklochförmigen Zentrierelement 7 seitlich nach außen und sind bezüglich zu diesem einander diametral gegenüberliegend angeordnet, sodass zwischen den Ausnehmungen und der Mantelfläche 6 jeweils ein kleiner Steg 11 gebildet wird.

Diese beiden Verschlussausnehmungen verlaufen zum einen entlang der Längsachse 8 des Befestigungselementes 2 und sind an einem von der Stirnfläche 4, an welcher das sacklochförmige Zentrierelement 7 und die beiden Verschlussausnehmungen münden, entfernten Bereich abgewinkelt geformt, sodass die Verschlussausnehmungen einen in der Seitenansicht etwa L-förmigen Pfad zur Aufnahme von entsprechenden Gegenverschlusselementen 20 bilden.

Etwa im Bereich des Gegenzentrierelements 16 weist das Gegenbefestigungselement 3 Gegenverschlusselemente 20 auf. Die Gegenverschlusselemente 20 sind zwei sich gegenüberliegende an die Wandung 15 angeformte Vorsprünge. Die Vorsprünge sind als Stifte ausgebildet, die jeweils senkrecht an der Wandung 15 hervorstehen.

Das Verschlusselement 10 des Befestigungselements 2 ist zu einer Aufnahme der Gegenverschlusselemente 20 des Gegenbefestigungselements 3 mit wenig Spiel ausgebildet. Zusammen bilden sie einen Bajonettverschluss. Das Gegenbefestigungselement 3 wird in das Befestigungselement 2 eingebracht und bei einem Anschlag derart um eine Drehachse, die parallel zu den Längsachsen 8, 18 verläuft, gedreht, dass die Stifte des Gegenverschlusselements 20 den Verschlussausnehmungen des Verschlusselements 10 entlang einer Querachse 12 folgen und den Bajonettverschluss schließen.

Bevorzugt ist hierbei das Innengewinde der Sacklochbohrung 19 des Gegenbefestigungselements 3 derart ausgerichtet, dass durch ein Drehen des Gegenbefestigungselements 3 um die Drehachse 8, 18 gleichzeitig das Gegenbefestigungselements 3 an das Betonbauteil 23 gezogen und der Bajonettverschluss zwischen dem Verschlusselement 10 des Befestigungselements 2 und den Gegenverschlusselementen 20 des Gegenbefestigungselements 3 geschlossen wird.

In einem Bereich der Öffnung der Sacklochbohrung 19 ist an das Gegenbefestigungselement 3 am Umfang eine Werkzeugkontur 17 zum formschlüssigen Angreifen eines Werkzeugs angeformt. Die Werkzeugkontur 17 weist sechs geradlinig verlaufende Außenkanten auf, die ein Sechseck ausbilden, wobei der Abstand zwischen den sich gegenüberliegenden Außenkanten in etwa dem Durchmesser des Gegenbefestigungselements 3 entspricht. Die Werkzeugkontur 17 entspricht somit der Umfangsform einer herkömmlichen Mutter und kann mit einem entsprechenden Schraubenschlüssel betätigt werden.

In der Mantelfläche 6 des Befestigungselements 2 sind zwei sich gegenüberliegende Aussparungen 13 vorgesehen, die komplementär zu den Verschlussausnehmungen des Verschlusselements 10 entlang der Querachse 12 verlaufen.

In der Stirnfläche 4 sind zwischen dem Zentrierelement 7 und der Mantelfläche 6 jeweils zwei sich gegenüberliegende Bohrungen 14 ausgebildet. Die Bohrungen 14 erstrecken sich entlang der Längsachse 8 durchgängig von der Stirnfläche 4 bis zur Bodenfläche 5. Die Bohrungen 14 sind zur Aufnahme von Schrauben vorgesehen und um das Befestigungselement 2 fest mit dem Holzbauteil 21 zu verbinden.

Das Befestigungselement 2 und das Gegenbefestigungselement 3 können aus Stahl, Aluminium oder einem anderen Metall ausgebildet sein. Es kann auch vorgesehen sein, das Befestigungselement 2 und das Gegenbefestigungselement 3 aus Kunststoff auszubilden. Vorzugsweise werden das Befestigungselement 2 und das Gegenbefestigungselement 3 in einem Spritzgussverfahren hergestellt. Dies ermöglicht es kostengünstig eine hohe Stückzahl herstellen zu können.

In einer bevorzugten Ausführungsform weisen das Befestigungselement 2 und das Gegenbefestigungselement 3 eine Einrichtung zum Schallschutz auf. Es kann beispielsweise ein Zwischenstück aus Kunststoff vorgesehen sein, das in oder am Befestigungselement 2 oder am Gegenbefestigungselement 3 angeordnet ist. Vorzugsweise ist das Zwischenstück aus Kunststoff in das Zentrierelement 7 des Befestigungselement 2 integriert und bietet zusätzlich eine federnde Wirkung zwischen dem Befestigungselement 2 und dem Gegenbefestigungselement 3. Beispielsweise kann das Befestigungselement 2 auch eine Kunststoffummantelung aufweisen. Das Zwischenstück aus Kunststoff bzw. die Kunststoffummantelung sorgen für eine schalldämpfende Wirkung.

Auch die Ausbildung des Befestigungselements 2 und/oder des Gegenbefestigungselement 3 aus einem Leichtmetall, wie z.B. Aluminium oder einer Aluminiumlegierung, bietet eine geringe Schallübertragung und trägt zur Schallisolierung bei.

Im obigen Ausführungsbeispiel sind ein Holzbauteil 21, in das das Befestigungselement 2 versenkt wird, und ein Betonbauteil 23 mit dem Haltelement 22, an das das Gegenbefestigungselement 3 angeschraubt wird, vorgesehen. Es ist anstelle des Holzbauteils 21 auch möglich, das Befestigungselement 2 in einem Betonbauteil zu versenken. So können mit dem Befestigungselement 2 und dem Gegenbefestigungselement 3 zwei Betonbauteile, vorzugsweise Betonfertigbauteile, miteinander verbunden werden. Anstelle des Betonbauteils 23 ist wiederum auch möglich, das Gegenbefestigungselement 3 mittels dem Halteelement 22 an einem Holzbauteil anzuschrauben. So können zwei Holzbauteile, vorzugsweise Holzfertigbauteile, miteinander verbunden werden. Es ist auch möglich anstelle des Holzbauteils 21 und des Betonbauteils 23 jeweils Stahlbauteile vorzusehen, in denen das Befestigungselement 2 versenkt wird bzw. an denen das Gegenbefestigungselement 3 mittels dem Halteelement 22 angeschraubt wird. So können zwei Stahlbauteile, vorzugsweise Stahlfertigbauteile, miteinander verbunden werden

Nachfolgend wird ein Verfahren zum lösbaren Verbinden von einem ersten Bauteil und einem zweiten Bauteil mit einer erfindungsgemäßen Befestigungsvorrichtung 1 erläutert.

Das erste Bauteil ist das Holzbauteil 21 und das zweite Bauteil ist das Betonbauteil 23. Das Betonbauteil 23 weist ein Halteelement 22 in Form einer Gewindestange auf, die fest mit dem Betonbauteil 23 verbunden ist.

Das Befestigungselement 2 wird in einer dafür vorgesehenen Ausfräsung im Holzbauteil 21 versenkt, sodass die Stirnfläche 4 plan mit der Oberfläche des Holzbauteils 21 verläuft. Mittels Schrauben, die durch die Bohrungen 14 des Befestigungselement 2 verlaufen, wird das Befestigungselement 2 fest mit dem Holzbauteil 21 verbunden.

Mittels der Werkzeugkontur 17 wird das Gegenbefestigungselement 3 mit dem Innengewinde der Sacklochbohrung 19 auf die Gewindestange des Betonbauteils 23 geschraubt. Hierfür wird ein Schraubenschlüssel an der Werkzeugkontur 17 angesetzt und um die Drehachse 8, 18 gedreht.

In einem vormontierten Zustand ist somit das Befestigungselement 2 derart im Holzbauteil 21 versenkt, dass die Stirnfläche 4 des Befestigungselements 2 plan mit einer Oberfläche des Holzbauteils 21 verläuft. Gleichzeitig ist das Gegenbefestigungselement 3 derart am Betonbauteil 23 befestigt, dass das Innengewinde der Sacklochbohrung 19 des Gegenbefestigungselements 3 mit dem Außengewinde der Gewindestange in Eingriff steht.

Das Holzbauteil 21 wird mit dem Befestigungselement 2 entlang der Längsachsen 8, 18 auf das Gegenbefestigungselement 3 am Betonbauteil 23 gesteckt und bis zum Anschlag hineingedrückt. Hierbei schiebt sich das Gegenbefestigungselement 3 in das Zentrierelement 7 des Befestigungselements 2 und das Gegenzentrierelement 16 des Gegenbefestigungselements 3 wird passgenau vom Zentrierelement 7 des Befestigungselements 2 aufgenommen. Gleichzeitig schieben sich die Stifte des Gegenverschlusselements 20 des Gegenbefestigungselements 3 in die dafür vorgesehenen Verschlussausnehmungen des Verschlusselements 10 des Befestigungselements 2.

Durch ein Drehen des Gegenbefestigungselements 3 um die Drehachse 8, 18 folgen die Stifte des Gegenverschlusselements 20 des Gegenbefestigungselements 3 den Verschlussausnehmungen des Verschlusselements 10 des Befestigungselements 2 entlang der Querachse 12 und erzeugen eine formschlüssige Verbindung zwischen dem Befestigungselement 2 und dem Gegenbefestigungselement 3. Somit wird der Bajonettverschluss zwischen dem Verschlusselement 10 des Befestigungselements 2 und den Gegenverschlusselementen 20 des Gegenbefestigungselements 3 geschlossen.

In einem montierten Zustand ist somit das Gegenbefestigungselement 3 formschlüssig in das Befestigungselement 2 eingebracht und der Bajonettverschluss zwischen dem Verschlusselement 10 des Befestigungselements 2 und den Gegenverschlusselementen 20 des Gegenbefestigungselements 3 geschlossen. In diesem Zustand wird ein mögliches Herausziehen oder Herausfallen des Befestigungselements 2 weg vom Gegenbefestigungselement 3 verhindert.

Bevorzugt ist das Innengewinde der Sacklochbohrung 19 des Gegenbefestigungselements 3 derart ausgerichtet ist, dass durch ein Drehen des Gegenbefestigungselements 3 um die Drehachse 8, 18 gleichzeitig das Gegenbefestigungselements 3 an der Gewindestange festgeschraubt und der Bajonettverschluss geschlossen wird. Somit kann durch eine Drehung des Gegenbefestigungselements 3 um die Drehachse 8, 18 gleichzeitig ein finales Fixieren des Gegenbefestigungselements 3 an der Gewindestange und das Schließen des Bajonettverschlusses erreicht werden.

### Bezugszeichenliste

- 1: Befestigungsvorrichtung
- 2: Befestigungselement
- 3: Gegenbefestigungselement
- 4: Stirnfläche
- 5: Bodenfläche
- 6: Mantelfläche
- 7: Zentrierelement
- 8: Längsachse/Drehachse
- 10: Verschlusselement
- 11: Steg
- 12: Querachse
- 13: Aussparung
- 14: Bohrung
- 15: Wandung
- 16: Gegenzentrierelement
- 17: Werkzeugkontur
- 18: Längsachse/Drehachse
- 19: Sacklochbohrung
- 20: Gegenverschlusselement
- 21: Holzbauteil
- 22: Halteelement
- 23: Betonbauteil

## Patentansprüche

1. Befestigungsvorrichtung (1), umfassend
ein Befestigungselement (2) und ein Gegenbefestigungselement (3),
wobei das Befestigungselement (2) derart ausgebildet ist, dass es in einem ersten Bauteil, insbesondere einem Holzbauteil (21), versenkbar und befestigbar ist,
wobei das Gegenbefestigungselement (3) ein Gewinde aufweist, um mit einem in einem zweiten Bauteil, insbesondere einem Betonbauteil (23), befestigten bzw. eingegossenen Halteelement (22) schraubbar verbunden werden zu können,
wobei das Befestigungselement (2) und das Gegenbefestigungselement (3) einen Bajonettverschluss ausbilden und das Gegenbefestigungselement (3) am Halteelement (22) mittels der Schraubverbindung um eine Drehachse (8, 18) drehbar gelagert ist, **dadurch gekennzeichnet, dass** durch ein Drehen des Gegenbefestigungselements (3) um die Drehachse (8, 18) das Gegenbefestigungselement (3) vom Halteelement (22) gelöst bzw. an das Halteelement (22) gezogen werden kann, wodurch beim Lösen des Gegenbefestigungselements (3) vom Haltelement (22) der Bajonettverschluss geöffnet und beim Anziehen des Gegenbefestigungselements (3) an das Haltelement (22) der Bajonettverschluss geschlossen wird.

2. Befestigungsvorrichtung (1) gemäß Anspruch 1,
**dadurch gekennzeichnet,**
**dass** das Halteelement eine Gewindestange (22) mit einem Außengewinde ist und das Gegenbefestigungselement (3) eine Sacklochbohrung (19) mit einem Innengewinde aufweist, um mit dem Außengewinde der Gewindestange in Eingriff zu stehen.

3. Befestigungsvorrichtung (1) gemäß Anspruch 1,
**dadurch gekennzeichnet,**
**dass** das Halteelement eine Hülse mit einem Innengewinde ist und das Gegenbefestigungselement (3) einen Vorsprung mit einem Außengewinde aufweist, um mit dem Innengewinde der Hülse in Eingriff zu stehen.

4. Befestigungsvorrichtung (1) gemäß einem der Ansprüche 1 bis 3,
**dadurch gekennzeichnet,**
**dass** am Befestigungselement (2) ein Zentrierelement (7) vorgesehen ist und das Gegenbefestigungselement (3) an einer vom Halteelement wegweisenden Seite ein Gegenzentrierelement (16) aufweist, wobei das Zentrierelement (7) zur passgenauen Ineingriffnahme des Gegenzentrierelements (16) ausgebildet ist.

5. Befestigungsvorrichtung (1) gemäß Anspruch 4,
**dadurch gekennzeichnet,**
**dass** das Zentrierelement als ein konisch verjüngend verlaufendes Sackloch (7) ausgebildet ist und das Gegenzentrierelement eine sich konisch verjüngende Spitze (16) ist bzw. das Zentrierelement eine sich konisch verjüngende Spitze ist und das Gegenzentrierelement als ein konisch verjüngend verlaufendes Sackloch ausgebildet ist.

6. Befestigungsvorrichtung (1) gemäß einem der Ansprüche 1 bis 5,
**dadurch gekennzeichnet,**
**dass** am Befestigungselement (2) ein Verschlusselement (10) vorgesehen ist und das Gegenbefestigungselement (3) ein Gegenverschlusselement (20) aufweist,
wobei das Gegenverschlusselement (20) derart passgenau mit dem Verschlusselement (10) in Eingriff treten kann, dass das Verschlusselement (10) und das Gegenverschlusselement (20) den Bajonettverschluss ausbilden.

7. Befestigungsvorrichtung (1) gemäß Anspruch 6,
**dadurch gekennzeichnet,**
**dass** das Verschlusselement (10) zumindest eine Ausnehmung im Befestigungselement (2) ist und das Gegenverschlusselement (20) zumindest einen am Gegenbefestigungselement (3) angeformten Vorsprung aufweist bzw. das Verschlusselement (10) zumindest einen am Befestigungselement (2) angeformten Vorsprung aufweist und das Gegenverschlusselement (20) zumindest eine Ausnehmung im Gegenbefestigungselement (3) ist.

8. Befestigungsvorrichtung (1) gemäß einem der Ansprüche 1 bis 7,
**dadurch gekennzeichnet,**
**dass** das Gegenbefestigungselement (3) am Umfang eine Werkzeugkontur (17) zum formschlüssigen Angreifen eines Werkzeugs aufweist.

9. Befestigungsvorrichtung (1) gemäß einem der Ansprüche 1 bis 8,
**dadurch gekennzeichnet,**
**dass** das Befestigungselement (2) zumindest eine sich parallel zur Drehachse (8, 18) erstreckende Bohrung (14) aufweist, um das Befestigungselement (2) im ersten Bauteil mittels einer Schraube zu befestigen.

10. Befestigungsvorrichtung (1) gemäß einem der Ansprüche 1 bis 9,
**dadurch gekennzeichnet,**
**dass** das Gewinde des Gegenbefestigungselements (3) derart ausgerichtet ist, dass durch ein Drehen des Gegenbefestigungselements (3) gleichzeitig das Gegenbefestigungselement (3) an das zweite Bauteil gezogen und der Bajonettverschluss geschlossen wird.

11. Verfahren zum Befestigen eines ersten Bauteils, insbesondere eines Holzbauteils (21), an einem zweiten Bauteil, insbesondere einem Betonbauteil (23), mittels einer Befestigungsvorrichtung (1) gemäß einem der Ansprüche 1 bis 10, umfassend die Schritte
Versenken eines Befestigungselements (2) im ersten Bauteil,
Befestigen des Befestigungselements (2) im ersten Bauteil,
Schraubbares Verbinden eines Gegenbefestigungselements (3) mit einem am zweiten Bauteil befestigten bzw. darin eingegossenen Halteelement (22),
Zusammenführen des ersten Bauteils mit dem Befestigungselement (2) und des zweiten Bauteils mit dem Gegenbefestigungselement (3),
Ineingriffnahme eines Gegenverschlusselements (20) des Gegenbefestigungselements (3) mit einem Verschlusselement (10) des Befestigungselements (2) und
Drehen des Gegenbefestigungselements (3) um eine Drehachse (8, 18) zum Schließen eines Bajonettverschlusses.

12. Verfahren nach Anspruch 11,
**dadurch gekennzeichnet,**
**dass** das erste und/oder zweite Bauteil ein Fertigbauteil ist/sind.

13. Verfahren nach Anspruch 11 oder 12,
**dadurch gekennzeichnet,**
**dass** das erste Bauteil aus Holz, Beton und/oder Metall ausgebildet ist.

14. Verfahren nach einem der Ansprüche 11 bis 13,
**dadurch gekennzeichnet,**
**dass** das zweite Bauteil aus Holz, Beton und/oder Metall ausgebildet ist.

## Claims

1. A fastening device (1), comprising
a fastening element (2) and a counter-fastening element (3),
wherein the fastening element (2) is designed such that it can be sunk and fastened in a first component, in particular a wooden component (21),
wherein the counter-fastening element (3) comprises a thread so that it can be connected, in a screwable manner, to a retaining element (22) fastened to or cast in a second component, in particular a concrete component (23),
wherein the fastening element (2) and the counter-fastening element (3) form a bayonet lock and the counter-fastening element (3) is rotatably mounted on the retaining element (22) by means of the screw connection about a rotational axis (8, 18), **characterized in that**
by rotating the counter-fastening element (3) about the rotational axis (8, 18), the counter-fastening element (3) can be detached from the retaining element (22) or pulled to the retaining element (22), whereby the bayonet lock is opened when the counter-fastening element (3) is detached from the retaining element (22) and the bayonet lock is closed when the counter-fastening element (3) is pulled to the retaining element (22).

2. The fastening device (1) according to claim 1,
**characterized in that**
the retaining element is a threaded rod (22) with an external thread and the counter-fastening element (3) comprises a blind hole (19) with an internal thread to engage with the external thread of the threaded rod.

3. The fastening device (1) according to claim 1,
**characterized in that**
the retaining element is a sleeve with an internal thread and the counter-fastening element (3) comprises a projection with an external thread to engage with the internal thread of the sleeve.

4. The fastening device (1) according to any one of claims 1 to 3,
**characterized in that**
a centering element (7) is provided on the fastening element (2) and the counter-fastening element (3) comprises a counter-centering element (16) on a side facing away from the retaining element, the centering element (7) being designed for precise engagement with the counter-centering element (16).

5. The fastening device (1) according to claim 4,
**characterized in that**
the centering element is designed as a conically tapered blind hole (7) and the counter-centering element is a conically tapered tip (16), or the centering element is a conically tapered tip and the counter-centering element is designed as a conically tapered blind hole.

6. The fastening device (1) according to any one of claims 1 to 5,
**characterized in that**
a locking element (10) is provided on the fastening element (2) and the counter-fastening element (3) comprises a counter-locking element (20),
wherein the counter-locking element (20) can engage with the locking element (10) with such a precise fit that the locking element (10) and the counter-locking element (20) form the bayonet lock.

7. The fastening device (1) according to claim 6,
**characterized in that**
the locking element (10) is at least one recess in the fastening element (2) and the counter-locking element (20) comprises at least one projection formed on the counter-fastening element (3), or the locking element (10) comprises at least one projection formed on the fastening element (2) and the counter-locking element (20) is at least one recess in the counter-fastening element (3).

8. The fastening device (1) according to any one of claims 1 to 7,
**characterized in that**
the counter-fastening element (3) comprises a tool contour (17) on its circumference for form-fitting engagement with a tool.

9. The fastening device (1) according to any one of claims 1 to 8,
**characterized in that**
the fastening element (2) comprises at least one bore (14) extending parallel to the rotational axis (8, 18) in order to fasten the fastening element (2) in the first component by means of a screw.

10. The fastening device (1) according to any one of claims 1 to 9,
**characterized in that**
the thread of the counter-fastening element (3) is aligned in such a way that, by turning the counter-fastening element (3), the counter-fastening element (3) is pulled to the second component and simultaneously the bayonet lock is closed.

11. A method for fastening a first component, in particular a wooden component (21), to a second component, in particular a concrete component (23), by means of a fastening device (1) according to any one of claims 1 to 10, comprising the steps of
countersinking a fastening element (2) in the first component,
fastening the fastening element (2) in the first component,
connecting, in a screwable manner, a counter-fastening element (3) to a retaining element (22) fastened to or cast in the second component,
combining the first component including the fastening element (2) and the second component including the counter-fastening element (3),
engaging a counter-locking element (20) of the counter-fastening element (3) with a locking element (10) of the fastening element (2), and
rotating the counter-fastening element (3) about a rotational axis (8, 18) to close a bayonet lock.

12. The method according to claim 11,
**characterized in that**
the first and/or second components are prefabricated components.

13. The method according to claim 11 or 12,
**characterized in that**
the first component is made of wood, concrete, and/or metal.

14. The method according to any one of claims 11 to 13,
**characterized in that**
the second component is made of wood, concrete and/or metal.

## Revendications

1. Dispositif de fixation (1), comprenant
un élément de fixation (2) et un contre-élément de fixation (3),
l'élément de fixation (2) étant conçu de manière à pouvoir être enfoncé et fixé dans un premier composant, en particulier un composant en bois (21),
le contre-élément de fixation (3) comportant un filetage de manière à pouvoir être vissé sur un élément de retenue (22) fixé ou noyé dans un deuxième composant, en particulier un composant en béton (23),
l'élément de fixation (2) et le contre-élément de fixation (3) formant un verrouillage à baïonnette et le contre-élément de fixation (3) étant monté de manière rotative sur l'élément de retenue (22) autour d'un axe de rotation (8, 18) au moyen de la connexion vissée, **caractérisé en ce que**
en tournant le contre-élément de fixation (3) autour de l'axe de rotation (8, 18), le contre-élément de fixation (3) peut être détaché de l'élément de retenue (22) ou tiré vers l'élément de retenue (22), par lequel le verrouillage à baïonnette s'ouvre lorsque le contre-élément de fixation (3) est détaché de l'élément de retenue (22) et le verrouillage à baïonnette est fermé lorsque le contre-élément de fixation (3) est tiré vers l'élément de retenue (22).

2. Le dispositif de fixation (1) selon la revendication 1,
**caractérisé en ce que**
l'élément de retenue est une tige filetée (22) ayant un filetage extérieur et le contre-élément de fixation (3) comporte un trou borgne (19) ayant un filetage intérieur pour s'engager avec le filetage extérieur de la tige filetée.

3. Le dispositif de fixation (1) selon la revendication 1,
**caractérisé en ce que**
l'élément de retenue est un manchon ayant un filetage intérieur et le contre-élément de fixation (3) comporte une saillie ayant un filetage extérieur pour s'engager avec le filetage intérieur du manchon.

4. Le dispositif de fixation (1) selon l'une quelconque des revendications 1 à 3,
**caractérisé en ce que**
un élément de centrage (7) est prévu sur l'élément de fixation (2) et le contre-élément de fixation (3) comporte un contre-élément de centrage (16) sur un côté opposé à l'élément de retenue, ledit élément de centrage (7) étant formé pour s'engager avec précision dans le contre-élément de centrage (16).

5. Le dispositif de fixation (1) selon la revendication 4,
**caractérisé en ce que**
l'élément de centrage est formé comme un trou borgne conique (7) et le contre-élément de centrage est une pointe conique (16), ou l'élément de centrage est une pointe conique et le contre-élément de centrage est formé comme un trou borgne conique.

6. Le dispositif de fixation (1) selon l'une quelconque des revendications 1 à 5,
**caractérisé en ce que**
un élément de verrouillage (10) est prévu sur l'élément de fixation (2) et le contre-élément de fixation (3) comporte un contre-élément de verrouillage (20),
ledit contre-élément de verrouillage (20) peut s'engager dans l'élément de verrouillage (10) avec une précision telle que l'élément de verrouillage (10) et le contre-élément de verrouillage (20) forment le verrouillage à baïonnette.

7. Le dispositif de fixation (1) selon la revendication 6,
**caractérisé en ce que**
l'élément de verrouillage (10) est au moins un évidement dans l'élément de fixation (2) et le contre-élément de verrouillage (20) comporte au moins une saillie formée sur le contre-élément de fixation (3), ou l'élément de verrouillage (10) comporte au moins une saillie formée sur l'élément de fixation (2) et le contre-élément de verrouillage (20) est au moins un évidement dans le contre-élément de fixation (3).

8. Le dispositif de fixation (1) selon l'une quelconque des revendications 1 à 7,
**caractérisé en ce que**
le contre-élément de fixation (3) comporte un profil d'outil (17) sur sa circonférence pour s'engager par complémentarité de forme avec un outil.

9. Le dispositif de fixation (1) selon l'une quelconque des revendications 1 à 8,
**caractérisé en ce que**
l'élément de fixation (2) comporte au moins un alésage (14) s'étendant parallèlement à l'axe de rotation (8, 18) afin de fixer l'élément de fixation (2) dans le premier composant au moyen d'une vis.

10. Le dispositif de fixation (1) selon l'une quelconque des revendications 1 à 9,
**caractérisé en ce que**
le filetage du contre-élément de fixation (3) est aligné de telle sorte que, en tournant le contre-élément de fixation (3), celui-ci est tiré vers le deuxième composant et que, simultanément, le verrouillage à baïonnette est fermé.

11. Procédé destiné à fixer un premier composant, en particulier un composant en bois (21), à un deuxième composant, en particulier un composant en béton (23), à l'aide d'un dispositif de fixation (1) selon l'une quelconque des revendications 1 à 10, comprenant les étapes consistant à
enfoncer un élément de fixation (2) dans le premier composant,
fixer l'élément de fixation (2) dans le premier composant,
visser un contre-élément de fixation (3) à un élément de retenue (22) fixé ou noyé dans le deuxième composant,
rapprocher le premier composant ayant l'élément de fixation (2) et le deuxième composant ayant le contre-élément de fixation (3),
d'engager un contre-élément de verrouillage (20) du contre-élément de fixation (3) avec un élément de verrouillage (10) de l'élément de fixation (2), et
tourner le contre-élément de fixation (3) autour d'un axe de rotation (8, 18) pour fermer un verrouillage à baïonnette.

12. Le procédé selon la revendication 11,
**caractérisé en ce que**
le premier composant et/ou le deuxième composant sont des composants préfabriqués.

13. Le procédé selon la revendication 11 ou 12,
**caractérisé en ce que**
le premier composant est constitué de bois, de béton et/ou de métal.

14. Le procédé selon l'une quelconque des revendications 11 à 13,
**caractérisé en ce que**
le deuxième composant est constitué de bois, de béton et/ou de métal.
